# EUROPÄISCHE PATENTSCHRIFT

(11) **EP 4 374 486 B1**
(45) Veröffentlichungstag und Bekanntmachung des Hinweises auf die Patenterteilung: **04.11.2026**
(21) Anmeldenummer: 22735433.9
(22) Anmeldetag: 27.06.2022
(51) Int. Cl.: H02P 3/22, H02P 29/50

(54) **VERFAHREN ZUM BETREIBEN EINES ANTRIEBSSYSTEMS UND ANTRIEBSSYSTEM ZUR DURCHFÜHRUNG EINES VERFAHRENS**
METHOD FOR OPERATING A DRIVE SYSTEM, AND DRIVE SYSTEM FOR CARRYING OUT A METHOD
PROCÉDÉ POUR FAIRE FONCTIONNER UN SYSTÈME D'ENTRAÎNEMENT ET SYSTÈME D'ENTRAÎNEMENT POUR METTRE EN OEUVRE LE PROCÉDÉ

(30) Priorität: 21.07.2021 DE 102021003740
(43) Veröffentlichungstag der Anmeldung: 29.05.2024
(73) Patentinhaber: SEW-EURODRIVE GmbH & Co. KG, 76646 Bruchsal (DE)
(72) Erfinder: STARK, Marcel, 74909 Meckesheim (DE)
(86) Internationale Anmeldenummer: PCT/EP2022/067610
(87) Internationale Veröffentlichungsnummer: WO 2023/001499

(56) Entgegenhaltungen:
- DE-A1- 10 212 605
- DE-A1- 102019 005 019

## Beschreibung

Die Erfindung betrifft ein Verfahren zum Betreiben eines Antriebssystems und ein Antriebssystem zur Durchführung eines Verfahrens.

Es ist allgemein bekannt, dass ein Antriebssystem einen von einem Wechselrichter gespeisten Elektromotor aufweist.

**Aus der** DE 10 2019 005 019 A1 **ist als nächstliegender Stand der Technik ein Verfahren zum Betreiben eines Antriebssystems bekannt.**

**Aus der** US 2010 10 332 065 A1 **ist ein elektrischer Fahrzeugantrieb bekannt.**

**Aus der** JP 2019 - 30 044 A **ist ein elektromotorisches Antriebssystem bekannt.**

**Aus der** CN 1 242 536 C **ist ein Umrichter bekannt.**

**Aus der** JP 2020 - 188 636 A **ist ein Leistungsumrichter bekannt.**

**Aus der** DE 102 12 605 A1 **ist ein Verfahren zur getakteten Ansteuerung eines Schaltelements bekannt.**

Der Erfindung liegt daher die Aufgabe zugrunde, ein Antriebssystem umweltschonend weiterzubilden.

Erfindungsgemäß wird die Aufgabe bei dem Antriebssystem nach den in Anspruch 1 und bei dem Verfahren nach den in Anspruch **13** angegebenen Merkmalen gelöst.

Wichtige Merkmale der Erfindung bei dem Verfahren zum Betreiben eines Antriebssystems, aufweisend einen Gleichrichter, zumindest einen Wechselrichter mit Elektromotor, sind, dass der Elektromotor am wechselspannungsseitigen Anschluss des Wechselrichters angeschlossen ist,
wobei der gleichspannungsseitige Anschluss des Wechselrichters über eine Induktivität, insbesondere Leitungsinduktivität, mit dem gleichspannungsseitigen Anschuss des Gleichrichters verbunden ist,
wobei am gleichspannungsseitigen Anschluss des Wechselrichters und/oder am gleichspannungsseitigen Anschluss des Gleichrichters eine Kapazität angeschlossen ist, insbesondere ein nicht polarer Kondensator, insbesondere ein Folienkondensator,
wobei am gleichspannungsseitigen Anschluss des Wechselrichters und/oder am gleichspannungsseitigen Anschluss des Gleichrichters eine jeweilige jeweils aus einem Widerstand und einem steuerbaren Halbleiterschalter, also Brems-Chopper, gebildete Reihenschaltung angeschlossen ist,
wobei der Brems-Chopper in derjenigen Zeitspanne, in welcher der Brems-Chopper betrieben wird, mit einer Pulsweitenmodulationsfrequenz f betrieben wird, welche beabstandet ist von der Resonanzfrequenz des aus der Induktivität und der oder den Kapazitäten gebildeten Schwingkreises, insbesondere Resonanzkreises,
wobei die Pulsweitenmodulationsfrequenz f von einem Pseudozufallsgenerator vorgegeben wird, insbesondere für eine jeweilige Zeitdauer.

Von Vorteil ist dabei, dass die Geräuschemission beim Betrieb des Bremswiderstands verringert werden. Denn durch die zeitliche Veränderung der Pulsweitenmodulationsfrequenz ist ein Aufschwingen einer Resonanzfrequenz verhindert und auch der abgestrahlte Schall für Menschen weniger störend. Insgesamt ist die abgestrahlte Energie im Frequenzraum breiter aufgeteilt als beim Betrieb mit nur einer einzigen Pulsweitenmodulationsfrequenz. Da der Brems-Chopper nicht nur vom Pseudozufallsgenerator zeitabhängig betrieben wird sondern auch noch die Betriebszeiten abhängig von der Gleichspannung, insbesondere Zwischenkreisspannung, sind, ist der Umweltschutz weiter verbessert. Denn die Emissionen an Schall sind verringert. Außerdem ist die Gefahr der Anregung einer Resonanzfrequenz einer elektrischen Schwingung verringerbar.

Bei einer vorteilhaften Ausgestaltung ist die Pulsweitenmodulationsfrequenz f beabstandet von Harmonischen, insbesondere Oberschwingungen, der Resonanzfrequenz des aus der Induktivität und der oder den Kapazitäten gebildeten Schwingkreises, insbesondere Resonanzkreises. Von Vorteil ist dabei, dass keine Anregung einer elektrischen Schwingung im Zwischenkreis erfolgt.

Bei einer vorteilhaften Ausgestaltung ist die Pulsweitenmodulationsperiodendauer, also der Kehrwert der Pulsweitenmodulationsfrequenz, durch im Takt eines ersten Taktsignals ausgeführten Herabzählen eines zu Beginn der Pulsweitenmodulationsperiode mit einem Startwert beladenen Zähler bestimmt,
wobei der Startwert vom Pseudozufallsgenerator vorgegebenen wird,
insbesondere wobei der Pseudozufallsgenerator im Takt eines zweiten Taktsignals arbeitet. Von Vorteil ist dabei, dass die Schallemission verringert und somit der Umweltschutz verbessert ist.

**Erfindungsgemäß** weist der Pseudozufallsgenerator ein über ein Verknüpfungsglied rückgekoppeltes Schieberegister auf,
insbesondere wobei das Verknüpfungsglied beim Einschalten einen insbesondere nichtverschwindenden Anfangswert dem Schieberegister zuführt und danach, insbesondere also im weiteren Betrieb, das Ergebnis einer logischen Verknüpfung von Ausgangssignalen des Schieberegisters dem Eingang des Schieberegisters zugeführt wird. Von Vorteil ist dabei, dass eine einfache kostengünstige Realisierung ermöglicht ist.

Bei einer vorteilhaften Ausgestaltung weist der Pseudozufallsgenerator hintereinandergeschaltete Flip-Flops, insbesondere Toggle-Flip-Flops, insbesondere T-Flip-Flops, auf, deren Takteingänge synchron mit demselben Taktsignal, insbesondere mit dem zweiten Taktsignal, beaufschlagt werden und deren Ausgänge als Startwert, insbesondere digital parallel dargestellter Startwert, einem Zähler zugeführt werden, insbesondere nachdem der Zähler zuvor auf Eins herabgezählt hat und/oder wenn der Zähler gestartet wird,
wobei Ausgänge der Flip-Flops einem Verknüpfungsglied zugeführt werden, dessen Ausgang dem Eingang eines ersten der hintereinandergeschalteten Flip-Flops zugeführt wird. Von Vorteil ist dabei, dass eine einfache kostengünstige Realisierung ermöglicht ist.

Bei einer vorteilhaften Ausgestaltung ist die logische Verknüpfung eine EXOR-Verknüpfung, insbesondere also Exklusiv-ODER-Verknüpfung, oder nur aus EXOR-Verknüpfungen, insbesondere also Exklusiv-ODER-Verknüpfungen, zusammengesetzt. Von Vorteil ist dabei, dass eine einfache kostengünstige Realisierung ermöglicht ist.

**Erfindungsgemäß** fungiert die logische Verknüpfung als Paritätsgenerator. Von Vorteil ist dabei, dass eine einfache Funktion verwendbar ist.

Bei einer vorteilhaften Ausgestaltung ist das erste Taktsignal asynchron zu dem zweiten Taktsignal,
insbesondere das erste Taktsignal von einer anderen Zeitbasis erzeugt wird als das zweite Taktsignal,
insbesondere wobei ein erster Schwingquarz als Zeitbasis für das erste Taktsignal fungiert und ein davon unterschiedlicher zweiter Schwingquarz als Zeitbasis für das zweite Taktsignal fungiert. Von Vorteil ist dabei, dass trotz Verwendung eines Pseudozufallgenerators eine fast kontinuierliche Frequenzverteilung ermöglicht ist.

Bei einer vorteilhaften Ausgestaltung ist die Zeitbasis des Pseudozufallsgenerators unabhängig von der Zeitbasis der Erzeugung der Pulsweitenmodulationsfrequenz,
und/oder die Zeitbasis des Pseudozufallsgenerators asynchron zur Zeitbasis der Erzeugung der Pulsweitenmodulationsfrequenz ist. Von Vorteil ist dabei, dass eine einfache Realisierung eine Verbreiterung der diskreten Verteilung im Frequenzraum ermöglicht.

Bei einer vorteilhaften Ausgestaltung ist der Kehrwert der Zeitdauer T größer als die Resonanzfrequenz des aus der Induktivität und der oder den Kapazitäten gebildeten Resonanzkreises, insbesondere Schwingkreises. Von Vorteil ist dabei, dass die Pulsweitenmodulationsfrequenz beabstandet ist von der Resonanzfrequenz und somit keine Resonanzschwingung angeregt werden kann.

Bei einer vorteilhaften Ausgestaltung wird der Brems-Chopper stets dann ausgeschaltet, wenn die Zwischenkreisspannung einen ersten Schwellwert unterschreitet. Von Vorteil ist dabei, dass geringere Verluste auftreten und die Wechselrichter mit voller Leistung versorgbar sind.

Bei einer vorteilhaften Ausgestaltung wird der Brems-Chopper eingeschaltet, wenn die Zwischenkreisspannung einen ersten Schwellwert überschreitet,
insbesondere und wenn entweder zuvor kein Einschalten stattgefunden hat oder das letzte zeitlich zuvor statt gefundene Einschalten mehr als eine vorgegebene Zeitdauer T zurückliegt,
wobei die Zeitdauer T dem Kehrwert der Frequenz f gleicht. Von Vorteil ist dabei, dass eine zu hohe Zwischenkreisspannung verhinderbar ist.

Bei einer vorteilhaften Ausgestaltung ist die zweite Schaltschwelle größer als die erste Schaltschwelle. Von Vorteil ist dabei, dass oberhalb des zweiten Schwellwertes die Elektronik schützbar ist, indem der Brems-Chopper, also steuerbare Halbleiterschalter, dauerhaft geöffnet wird. Unterhalb des ersten Schwellwertes bleibt der Halbleiterschalter ebenfalls dauerhaft geöffnet. Nur bei Spannungswerten zwischen dem ersten und dem zweiten Schwellwert wird der Halbleiterschalter pulsweitenmoduliert betrieben.

Wichtige Merkmale bei dem Antriebssystem zur Durchführung eines vorgenannten Verfahrens sind, dass ein im Takt eines ersten Taktsignals von einem jeweiligen Startwert herabzählender Zähler die Pulsweitenmodulationsperiodendauer, also der Kehrwert der Pulsweitenmodulationsfrequenz, bestimmt,
wobei ein im Takt eines zweiten Taktsignals betriebener Pseudozufallsgenerator den Startwert erzeugt,
wobei eine erste Zeitbasis das erste Taktsignal dem Zähler zuführt,
wobei eine zweite Zeitbasis das zweite Taktsignal dem Zähler zuführt.

Von Vorteil ist dabei, dass unterschiedliche Zeitbasen verwendbar sind und somit Periodizitäten verminderbar sind. Insbesondere ist die vom Pseudozufallsgenerator erzeugte Folge von Pulsweitenmodulationsfrequenzen deterministisch und daher auch periodisch. Zwar ist durch geeignete Auslegung des Pseudozufallsgenerators eine scheinbar zufällige Folge von Pulsweitenmodulationsfrequenzen erzeugbar, jedoch ist bei gleichem Anfangswert die selbe Folge erzeugt und somit eine Periodizität vorhanden. Durch Verwendung von unterschiedlichen, insbesondere voneinander unabhängigen, also asynchronen, Zeitbasen ist die Periodizität nicht mehr streng, sondern in eine Quasi-Periodizität verändert, was im Frequenzraum zu einer Verbreiterung der jeweiligen Frequenzlinien entspricht. Durch Verbreiterung aller Linien des diskreten Spektrums entsteht dann ein quasi-kontinuierliches Spektrum.

Bei einer vorteilhaften Ausgestaltung ist die zweite Zeitbasis derart unabhängig von der ersten Zeitbasis ausgeführt, dass die erste Zeitbasis asynchron zur zweiten Zeitbasis arbeitet, also das erste Taktsignal asynchron zum zweiten Taktsignal ist. Von Vorteil ist dabei, dass zwar ein Pseudozufallsgenerator verwendet wird und somit ein periodisches Wiederholen einer Abfolge von Pulsweitenmodulationsfrequenzen auftreten könnte, was einer diskreten und nicht voll kontinuierlichen Verteilung der Pulsweitenmodulationsfrequenzen im verwendeten Frequenzband gleichkommt. Aber durch die Asynchronität ist die Abfolge dieser Frequenzen nicht synchron zur Pulsweitenmodulation selbst. Auf diese Weise sind ein Aufschwingen und/oder Schwebefrequenzen verhindert. Im Frequenzraum wird die eigentlich diskrete Verteilung der Frequenzen sozusagen verschmiert, nähert sich also einer kontinuierlichen Verteilung an.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

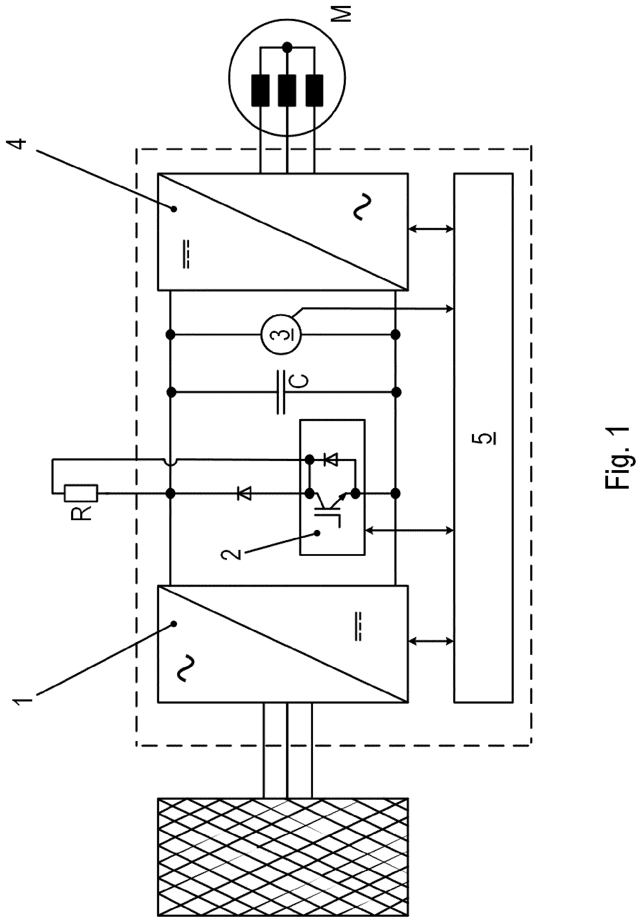

In der Figur 1 ist der Zwischenkreis eines Umrichters dargestellt.
In der Figur 2 ist ein mehrere Wechselrichter 4 aufweisendes Antriebssystem dargestellt.
In der Figur 3 ist eine Ansteuersignalerzeugungseinheit schematisch dargestellt.

Wie in den Figuren dargestellt, weist der Umrichter einen Gleichrichter 1 auf, dessen gleichspannungsseitiger Anschluss den gleichspannungsseitigen Anschluss eines Wechselrichters 4 aufweist. Außerdem ist eine Kapazität, insbesondere Zwischenkreiskondensator, parallel zum gleichspannungsseitigen Anschluss des Wechselrichters 4 angeordnet ist.

Mittels eines Sensors 3 wird die am gleichspannungsseitigen Anschluss des Wechselrichters 4 anliegende Spannung erfasst und der erfasste Wert einer Signalelektronik 5 zugeleitet.

Ebenfalls parallel zum gleichspannungsseitigen Anschluss des Wechselrichters 4 ist eine Reihenschaltung angeordnet, welche aus einem Widerstand R und einem steuerbaren Halbleiterschalter 2 gebildet ist.

Der Widerstand R fungiert als Bremswiderstand. Wenn nun die an der Reihenspannung anliegende Spannung einen Schwellwert übersteigt, wird der Bremswiderstand mit einer elektrischen Leistung beaufschlagt.

Aus dem wechselspannungsseitigen Anschluss des Wechselrichters 4 wird ein Elektromotor M, insbesondere ein Drehstrommotor, gespeist.

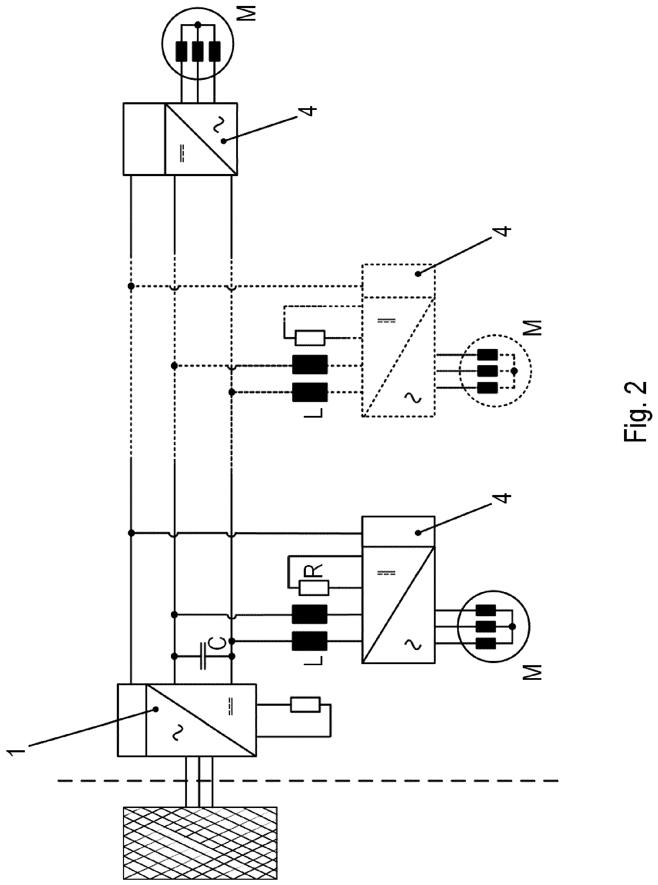

Wie in Figur 2 dargestellt, ist bei einem erfindungsgemäßen Antriebssystem eine Vielzahl von Wechselrichtern 4, an deren wechselspannungsseitigem Anschluss jeweils ein Elektromotor M angeschlossen ist, parallel aus einem netzgespeisten Gleichrichter 1 versorgbar. Dabei ist eine Kapazität C zur Glättung der gleichspannungsseitig am Gleichrichter 1 anliegenden Spannung vorgesehen.

Die Leitungsinduktivitäten der Gleichspannungsverschienung zwischen den gleichspannungsseitigen Anschlüssen der Wechselrichter 4 und des Gleichrichters 1 ist mit der Induktivität L gekennzeichnet. Diese Leitungsinduktivitäten sind vorzugsweise erzeugt durch Stromschienen, welche die gleichspannungsseitigen Anschlüsse der Wechselrichter 4 und den gleichspannungsseitigen Anschluss des Gleichrichters 1 miteinander verbinden.

Jedem Wechselrichter 4 ist eine Reihenschaltung aus einem Bremswiderstand R und einem steuerbaren Halbleiterschalter zugeordnet, wobei die Reihenschaltung aus dem gleichspanungsseitigen Anschluss des Wechselrichters 4 versorgt ist.

Auch am gleichspannungsseitigen Anschluss des Gleichrichters 1 ist eine Reihenschaltung aus einem Bremswiderstand R und einem steuerbaren Halbleiterschalter zugeordnet, wobei die Reihenschaltung aus dem gleichspanungsseitigen Anschluss des Gleichrichters 1 versorgt ist.

Erfindungsgemäß wird nun der jeweilige steuerbare Halbleiterschalter pulsweitenmoduliert angesteuert, wenn die Spannung am jeweiligen gleichspannungsseitigen Anschluss einen Schwellwert überschreitet. Wenn jedoch ein im Vergleich zum Schwellwert noch höher liegender Schwellwert überschritten wird, wird der steuerbare Halbleiterschalter abgeschaltet, also geöffnet.

Im pulsweitenmodulierten Betrieb wird die Pulsweitenmodulationsfrequenz zeitlich wiederkehrend verändert. Dabei ist das von den dabei verwendeten Pulsweitenmodulationsfrequenzen überdeckte Frequenzband beabstandet von der Resonanzfrequenz desjenigen Schwingkreises, der aus den Leitungsinduktivitäten L und der Kapazität C gebildet ist. Außerdem ist das Frequenzband beabstandet von den Harmonischen dieser Resonanzfrequenz.

Wenn beispielsweise die Resonanzfrequenz 2,5 kHz beträgt, wird vorteilhafterweise das Frequenzband zwischen 3 kHz und 4,5 kHz gelegt.

Die Pulsweitenmodulationsfrequenzen werden als Pseudozufallsfolge bestimmt.

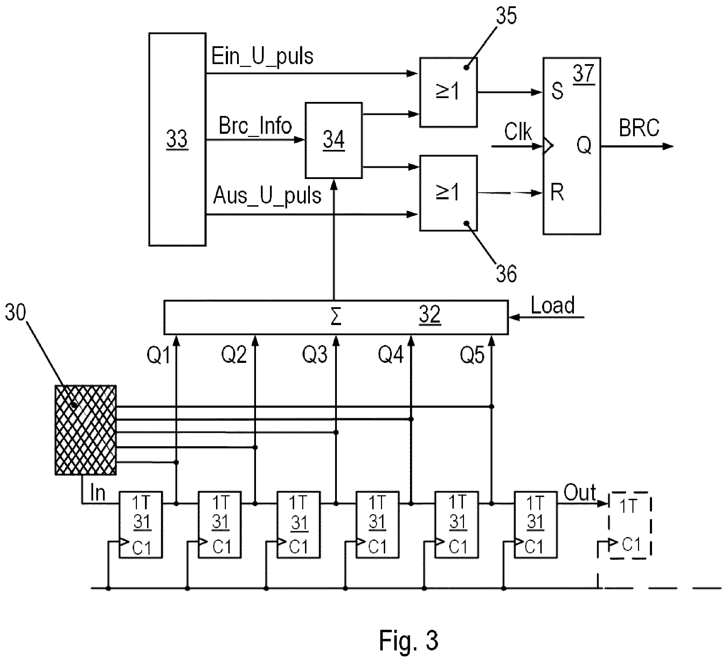

Wie in Figur 3 gezeigt, ist hierzu ein Pseudozufallsgenerator eingesetzt, der aus einer Hintereinanderschaltung von Flip-Flops 31, insbesondere Toggle-Flip-Flops, insbesondere T-Flip-Flops, besteht, wobei die Clock-Eingänge der Flip-Flops 31 miteinander verbunden sind. Der Ausgang eines jeweiligen Flip-Flops 31 ist mit dem Eingang des jeweils nachgeordneten Flip-Flops 31 verbunden. Außerdem werden die Ausgänge aller Flip-Flops 31 zu einer Startwerteinheit 32 geführt, die daraus einen Startwert für einen Zähler 34 bildet.

Einem Verknüpfungsglied 30 werden Ausgänge von vorzugsweise zwei oder mehr der Flip-Flops 31 zugeführt und logisch verknüpft, insbesondere mit EXOR-Verknüpfungen, insbesondere also Exklusiv-ODER-Verknüpfungen.

Insbesondere ist das Verknüpfungsglied 30 ein Paritätsgenerator.

Das Ergebnis der Verknüpfung wird vom Verknüpfungsglied 30 als Startwert dem ersten der Flip-Flops 31 zugeführt, wenn ein Ladesignal LOAD der Startwerteinheit 32 zugeführt wird.

Auf diese Weise ist der Startwert als Zufallswert erzeugt, indem die Hintereinanderschaltung mit dem Verknüpfungsglied 30 als rückgekoppeltes Schieberegister ausgeführt ist.

Der Zähler 34 inkrementiert den Startwert im Systemtakt, so dass der Zählerstand des Zählers 34 vom Startwert aus verringert wird, wenn das Freigabesignal BRC_info.

Der Zählerstand wird den ODER-Gliedern 35 und 36 zugeführt, die mit jeweiligen Signalen Ein_U_Puls und Aus_U_Puls einer Spannungslogik 33 verknüpfen.

Somit wird ein Regeln der Gleichspannung mit einer Pseudo-Fuzzy-Logik ermöglicht, welche mit Spannungsbedingungen und Zeitbedingungen arbeitet. Parallel zu festen spannungsmäßigen Ein- und Ausschaltschwellen ist eine durch den Zähler 34 zeitbedingte Steuerung des Halbleiterschalters überlagert. Die Sollfrequenz wird eingehalten.

Bei der Steuerung werden die zeitlichen Abstände, also die Sollperiode, der steigenden Flanken des Ansteuersignals des Halbleiterschalters, insbesondere also das Anschalten, zueinander sowie die Abstände der fallenden Flanke des Ansteuersignals, insbesondere also das Abschalten, zeitlich zueinander überwacht. Überschreitet eine Zeitbedingung die Sollperiode führt die zu einem zwangsweisen Umschalten des Halbleiterschalters. Die spannungs- und zeitbedingten Kriterien sind solange gültig, wie die Gleichspannung, also Zwischenkreisspannung im Bereich der Überspannungsabschaltschwelle und unteren Anschaltschwelle liegt. Andernfalls wird der Halbleiterschalter hochohmig geschaltet, also geöffnet. Dadurch ist auch ein Betrieb zwischen der Einschaltschwelle, also dem ersten Schwellwert, und einer Überspannungsabschaltschwelle ermöglicht. Hier arbeitet die Steuerung mit dem parametrierten Pulsweitenmodulationsverhältnis einer Mindesteinschaltzeit oder Mindestausschaltzeit.

Unabhängig von den Ergebnissen der Verknüpfung erzeugt das Verknüpfungsglied 30 beim Einschalten an seinem Ausgang einen von Null verschiedenen Defaultwert, der am Eingang In des ersten der Flip-Flops 31 anliegt. Nach dem Einschalten, also im laufenden Betrieb wird vom Verknüpfungsglied 30 das Ergebnis der logischen Verknüpfung, insbesondere der EXOR Verknüpfung, an den Eingang In des ersten der Flip-Flops 31 angelegt.

Das Ausgangssignal des ersten ODER-Glieds wird dem Setzeingang einer bistabilen Kippstufe 37 zugeführt.

Das Ausgangssignal des zweiten ODER-Glieds wird dem Rücksetzeingang der bistabilen Kippstufe 37 zugeführt.

Wenn somit die Gleichspannung, insbesondere Zwischenkreisspannung, zwischen den beiden Schwellwerten liegt, wird der steuerbare Halbleiterschalter ausgeschaltet, wenn durch das Herabzählen des Startwerts auf Eins eine Zeitdauer T erreicht wird, welche seitdem zeitlich zuvor ausgeführten Ausschalten des steuerbaren Halbleiterschalters abgelaufen ist, und der steuerbare Halbleiterschalter wird eingeschaltet, wenn die Zeitdauer T nach dem zeitlich zuvor ausgeführten Einschalten abgelaufen ist.

Effekt dieser Spannungsbedingungen und Zeitbedingungen ist, dass der Brems-Chopper auf jeden Fall mit der durch den Startwert bestimmten Frequenz f = 1/ T betrieben wird, wenn er betrieben wird. Ansonsten bleibt er ausgeschaltet.

Vorzugsweise wird für jeden steuerbaren Halbleiterschalter jeder der Reihenschaltungen, die an den gleichspannungsseitigen Anschlüssen der Wechselrichter 4 angeordnet sind, eine Steuerelektronik gemäß Figur 3 vorgesehen.

Bei weiteren erfindungsgemäßen Ausführungsbeispielen wird im Unterschied zur Figur 2 eine Reihenschaltung aus Bremswiderstand und steuerbarem Halbleiterschalter nicht an jedem gleichspannungsseitigen Anschluss jedes Wechselrichters angeordnet, sondern nur eine einzige Reihenschaltung aus einem Bremswiderstand und einem steuerbaren Halbleiterschalter im Zwischenkreis, insbesondere am gleichspannungsseitigen Anschluss des Gleichrichters.

### Bezugszeichenliste

1 Gleichrichter
2 steuerbarer Halbleiterschalter
3 Sensor zur Erfassung der Spannung
4 Wechselrichter
5 Signalelektronik
30 Verknüpfungsglied
31 Flip-Flop, insbesondere Toggle-Flip-Flop
32 Startwerteinheit
33 Spannungslogik
34 Zähler
35 ODER-Glied
36 ODER-Glied
37 bistabile Kippstufe, insbesondere Flip-Flop
M Elektromotor
L Leitungsinduktivität
C Kapazität
R Bremswiderstand

## Patentansprüche

1. Verfahren zum Betreiben eines Antriebssystems, aufweisend einen Gleichrichter (1), **zumindest** einen Wechselrichter (4) mit Elektromotor (M),
wobei der Elektromotor (M) am wechselspannungsseitigen Anschluss des Wechselrichters (4) angeschlossen ist,
wobei der gleichspannungsseitige Anschluss des Wechselrichters über eine Induktivität (L), insbesondere Leitungsinduktivität, mit dem gleichspannungsseitigen Anschuss des Gleichrichters (1) verbunden ist,
wobei am gleichspannungsseitigen Anschluss des Wechselrichters und/oder am gleichspannungsseitigen Anschluss des Gleichrichters (1) eine Kapazität (C) angeschlossen ist,
wobei am gleichspannungsseitigen Anschluss des Wechselrichters und/oder am gleichspannungsseitigen Anschluss des Gleichrichters eine jeweilige jeweils aus einem Widerstand (R) und einem steuerbaren Halbleiterschalter (2), also Brems-Chopper, gebildete Reihenschaltung angeschlossen ist,
wobei der Brems-Chopper in derjenigen Zeitspanne, in welcher der Brems-Chopper betrieben wird, mit einer Pulsweitenmodulationsfrequenz f betrieben wird, welche beabstandet ist von der Resonanzfrequenz des aus der Induktivität und der oder den Kapazitäten gebildeten Schwingkreises, insbesondere Resonanzkreises,
das Verfahren ist **dadurch gekennzeichnet, dass**
die Pulsweitenmodulationsfrequenz f von einem Pseudozufallsgenerator vorgegeben wird,
**wobei der Pseudozufallsgenerator ein über ein Verknüpfungsglied** (30) **rückgekoppeltes Schieberegister aufweist,**
**wobei das Verknüpfungsglied beim Einschalten einen Anfangswert dem Schieberegister zuführt und danach, insbesondere also im weiteren Betrieb, das Ergebnis einer logischen Verknüpfung von Ausgangssignalen des Schieberegisters dem Eingang des Schieberegisters zugeführt wird,**
**wobei die logische Verknüpfung als Paritätsgenerator fungiert.**

2. Verfahren nach Anspruch 1
**dadurch gekennzeichnet, dass**
die Pulsweitenmodulationsfrequenz f beabstandet ist von Harmonischen, insbesondere Oberschwingungen, der Resonanzfrequenz des aus der Induktivität und der oder den Kapazitäten gebildeten Schwingkreises, insbesondere Resonanzkreises.

3. Verfahren nach einem der vorangegangenen Ansprüche,
**dadurch gekennzeichnet, dass**
die Pulsweitenmodulationsperiodendauer, also der Kehrwert der Pulsweitenmodulationsfrequenz, durch im Takt eines ersten Taktsignals ausgeführten Herabzählen eines zu Beginn der Pulsweitenmodulationsperiode mit einem Startwert beladenen Zähler bestimmt ist,
wobei der Startwert vom Pseudozufallsgenerator vorgegebenen wird,
insbesondere wobei der Pseudozufallsgenerator im Takt eines zweiten Taktsignals arbeitet.

4. Verfahren nach einem der vorangegangenen Ansprüche,
**dadurch gekennzeichnet, dass**
der Pseudozufallsgenerator ein über ein Verknüpfungsglied rückgekoppeltes Schieberegister aufweist,
insbesondere wobei das Verknüpfungsglied beim Einschalten einen insbesondere nichtverschwindenden Anfangswert dem Schieberegister zuführt und danach, insbesondere also im weiteren Betrieb, das Ergebnis einer logischen Verknüpfung von Ausgangssignalen des Schieberegisters dem Eingang des Schieberegisters zugeführt wird.

5. Verfahren nach einem der vorangegangenen Ansprüche,
**dadurch gekennzeichnet, dass**
der Pseudozufallsgenerator hintereinandergeschaltete Flip-Flops, insbesondere Toggle-Flip-Flops, insbesondere T-Flip-Flops, aufweist, deren Takteingänge synchron mit demselben Taktsignal, insbesondere mit dem zweiten Taktsignal, beaufschlagt werden und deren Ausgänge als Startwert, insbesondere digital parallel dargestellter Startwert, einem Zähler zugeführt werden, insbesondere nachdem der Zähler zuvor auf Eins herabgezählt hat und/oder wenn der Zähler gestartet wird,
wobei Ausgänge der Flip-Flops einem Verknüpfungsglied zugeführt werden, dessen Ausgang dem Eingang eines ersten der hintereinandergeschalteten Flip-Flops zugeführt wird.

6. Verfahren nach einem der vorangegangenen Ansprüche,
**dadurch gekennzeichnet, dass**
die logische Verknüpfung eine EXOR-Verknüpfung, insbesondere also Exklusiv-ODER-Verknüpfung, ist oder nur aus EXOR-Verknüpfungen, insbesondere also Exklusiv-ODER-Verknüpfungen, zusammengesetzt ist.

7. Verfahren nach einem der vorangegangenen Ansprüche,
**dadurch gekennzeichnet, dass**
die logische Verknüpfung als Paritätsgenerator fungiert.

8. Verfahren nach einem der vorangegangenen Ansprüche,
**dadurch gekennzeichnet, dass**
das erste Taktsignal asynchron zu dem zweiten Taktsignal ist,
insbesondere das erste Taktsignal von einer anderen Zeitbasis erzeugt wird als das zweite Taktsignal,
insbesondere wobei ein erster Schwingquarz als Zeitbasis für das erste Taktsignal fungiert und ein davon unterschiedlicher zweiter Schwingquarz als Zeitbasis für das zweite Taktsignal fungiert,
und/oder dass
die Zeitbasis des Pseudozufallsgenerators unabhängig von der Zeitbasis der Erzeugung der Pulsweitenmodulationsfrequenz ist,
und/oder dass
die Zeitbasis des Pseudozufallsgenerators asynchron zur Zeitbasis der Erzeugung der Pulsweitenmodulationsfrequenz ist.

9. Verfahren nach mindestens einem der vorangegangenen Ansprüche,
**dadurch gekennzeichnet, dass**
der Kehrwert der Zeitdauer T größer ist als die Resonanzfrequenz des aus der Induktivität und der oder den Kapazitäten gebildeten Resonanzkreises, insbesondere Schwingkreises.

10. Verfahren nach mindestens einem der vorangegangenen Ansprüche,
**dadurch gekennzeichnet, dass**
der Brems-Chopper stets dann ausgeschaltet wird, wenn die Zwischenkreisspannung einen Schwellwert U2 unterschreitet.

11. Verfahren nach mindestens einem der vorangegangenen Ansprüche,
**dadurch gekennzeichnet, dass**
der Brems-Chopper eingeschaltet wird, wenn die Zwischenkreisspannung einen ersten Schwellwert U1 überschreitet,
insbesondere und wenn entweder zuvor kein Einschalten stattgefunden hat oder das letzte zeitlich zuvor statt gefundene Einschalten mehr als eine vorgegebene Zeitdauer T zurückliegt,
wobei die Zeitdauer T dem Kehrwert der Frequenz f gleicht.

12. Verfahren nach mindestens einem der vorangegangenen Ansprüche,
**dadurch gekennzeichnet, dass**
die erste Schaltschwelle U1 größer als die zweite Schaltschwelle U2 ist.

13. Antriebssystem eingerichtet zur Durchführung eines Verfahrens nach einem der vorangegangenen Ansprüche,
**dadurch gekennzeichnet, dass**
ein im Takt eines ersten Taktsignals von einem jeweiligen Startwert herabzählender Zähler die Pulsweitenmodulationsperiodendauer, also der Kehrwert der Pulsweitenmodulationsfrequenz, bestimmt,
wobei ein im Takt eines zweiten Taktsignals betriebener Pseudozufallsgenerator den Startwert erzeugt,
wobei eine erste Zeitbasis das erste Taktsignal dem Zähler zuführt,
wobei eine zweite Zeitbasis das zweite Taktsignal dem Zähler zuführt.

14. Antriebssystem nach mindestens einem der vorangegangenen Ansprüche,
**dadurch gekennzeichnet, dass**
die zweite Zeitbasis derart unabhängig von der ersten Zeitbasis ausgeführt ist, dass die erste Zeitbasis asynchron zur zweiten Zeitbasis arbeitet, also das erste Taktsignal asynchron zum zweiten Taktsignal ist.

## Claims

1. Method for operating a drive system comprising a rectifier (1) and at least one inverter (4) having an electric motor (M),
wherein the electric motor (M) is connected to the AC voltage-side terminal of the inverter (4),
wherein the DC voltage-side terminal of the inverter is connected to the DC voltage-side terminal of the rectifier (1) by means of an inductor (L), in particular a line inductor,
wherein a capacitor (C) is connected to the DC voltage-side terminal of the inverter and/or to the DC voltage-side terminal of the rectifier (1),
wherein a series circuit, formed in each case from a resistor (R) and a controllable semiconductor switch (2), i.e. a brake chopper, is connected to the DC voltage-side terminal of the inverter and/or to the DC voltage-side terminal of the rectifier,
wherein, in the time interval in which the brake chopper is operated, the brake chopper is operated at a pulse-width modulation frequency f that is spaced apart from the resonant frequency of the LC circuit, in particular the resonant circuit, formed from the inductor and the capacitor(s),
the method is **characterised in that**
the pulse-width modulation frequency f is predetermined by a pseudorandom generator, wherein the pseudorandom generator has a shift register fed back via a logic element (30), wherein the logic element feeds a starting value to the shift register upon activation, and then, i.e. in particular during further operation, the result of a logic operation on output signals of the shift register is fed to the input of the shift register,
wherein the logic operation functions as a parity generator.

2. Method according to claim 1,
**characterised in that**
the pulse-width modulation frequency f is spaced apart from harmonics, in particular harmonic components, of the resonant frequency of the LC circuit, in particular the resonant circuit, formed from the inductor and the capacitor(s).

3. Method according to any of the preceding claims,
**characterised in that**
the pulse-width modulation period duration, i.e. the reciprocal of the pulse-width modulation frequency, is determined **in that** a counter, which is loaded with a start value at the beginning of the pulse-width modulation period, counts down in the clock of a first clock signal, wherein the start value is predetermined by the pseudorandom generator,
in particular wherein the pseudorandom generator operates in the clock of a second clock signal.

4. Method according to any of the preceding claims,
**characterised in that**
the pseudorandom generator has a shift register fed back via a logic element,
in particular wherein the logic element feeds an in particular non-zero starting value to the shift register upon activation, and then, i.e. in particular during further operation, the result of a logic operation on output signals of the shift register is fed to the input of the shift register.

5. Method according to any of the preceding claims,
**characterised in that**
the pseudorandom generator has serially connected flip-flops, in particular toggle flip-flops, in particular T flip-flops, to the clock inputs of which the same clock signal, in particular the second clock signal, is synchronously applied, and the outputs of which are fed to a counter as a start value, in particular a start value depicted digitally in parallel, in particular after the counter has previously counted down to one and/or when the counter is started up, wherein outputs of the flip-flops are fed to a logic element, the output of which is fed to the input of a first of the serially connected flip-flops.

6. Method according to any of the preceding claims,
**characterised in that**
the logic operation is an XOR operation, i.e. in particular an exclusive OR operation, or is composed solely of XOR operations, i.e. in particular exclusive OR operations.

7. Method according to any of the preceding claims,
**characterised in that**
the logic operation functions as a parity generator.

8. Method according to any of the preceding claims,
**characterised in that**
the first clock signal is non-synchronous with the second clock signal,
in particular the first clock signal is generated from a different time base to the second clock signal,
in particular wherein a first crystal oscillator functions as the time base for the first clock signal, and a second, different crystal oscillator functions as the time base for the second clock signal,
and/or **in that**
the time base of the pseudorandom generator is independent of the time base for generating the pulse-width modulation frequency,
and/or **in that**
the time base of the pseudorandom generator is non-synchronous with the time base for generating the pulse-width modulation frequency.

9. Method according to at least one of the preceding claims,
**characterised in that**
the reciprocal of the time period T is greater than the resonant frequency of the LC circuit, in particular the resonant circuit, formed from the inductor and the capacitor(s).

10. Method according to at least one of the preceding claims,
**characterised in that**
the brake chopper is deactivated whenever the DC link voltage drops below a threshold value U2.

11. Method according to at least one of the preceding claims,
**characterised in that**
the brake chopper is activated when the DC link voltage exceeds a first threshold value U1, in particular and when either no activation has taken place previously or the most recent activation took place more than a predetermined time period T ago,
wherein the time period T is equal to the reciprocal of the frequency f.

12. Method according to at least one of the preceding claims,
**characterised in that**
the first switching threshold U1 is greater than the second switching threshold U2.

13. Drive system configured to carry out a method according to any of the preceding claims,
**characterised in that**
a counter which counts down from a particular start value in the clock of a first clock signal determines the pulse-width modulation period duration, i.e. the reciprocal of the pulse-width modulation frequency,
wherein a pseudorandom generator operated in the clock of a second clock signal generates the start value,
wherein a first time base feeds the first clock signal to the counter,
wherein a second time base feeds the second clock signal to the counter.

14. Drive system according to at least one of the preceding claims,
**characterised in that**
the second time base is implemented independently of the first time base such that the first time base operates non-synchronously with the second time base, i.e. the first clock signal is non-synchronous with the second clock signal.

## Revendications

1. Procédé pour commander un système d'entraînement, comprenant un redresseur (1),
au moins un onduleur (4) avec moteur électrique (M),
le moteur électrique (M) étant connecté à la borne côté courant alternatif de l'onduleur (4),
la borne côté courant continu de l'onduleur étant reliée, via une inductance (L), en particulier une inductance de ligne, à la borne côté courant continu du redresseur (1),
la borne côté courant continu de l'onduleur et/ou la borne côté courant continu du redresseur (1) ayant une capacité (C) connectée,
la borne côté courant continu de l'onduleur et/ou la borne côté courant continu du redresseur ayant respectivement un montage en série formé d'une résistance (R) et d'un interrupteur semiconducteur commandable (2),
c'est-à-dire un hacheur de freinage,
montage en série connecté,
le hacheur de freinage étant commandé, pendant la période où il est exploité, avec une fréquence de modulation de largeur d'impulsion f, laquelle est espacée de la fréquence de résonance du circuit oscillant, en particulier du circuit résonant, formé par l'inductance et la ou les capacités,
le procédé étant **caractérisé en ce que**
la fréquence de modulation de largeur d'impulsion f est déterminée par un générateur pseudo-aléatoire,
le générateur pseudo-aléatoire comprenant un registre à décalage rétro-couplé via un élément de liaison (30),
l'élément de liaison, lors de l'activation, applique une valeur initiale au registre à décalage et ensuite, en particulier lors du fonctionnement ultérieur, le résultat d'une liaison logique des signaux de sortie du registre à décalage est appliqué à l'entrée du registre à décalage,
la liaison logique fonctionne comme un générateur de parité.

2. Procédé selon la revendication 1, **caractérisé en ce que** la fréquence de modulation de largeur d'impulsion f est espacée des harmoniques, en particulier des harmoniques supérieures, de la fréquence de résonance du circuit oscillant, en particulier du circuit résonant, formé par l'inductance et la ou les capacités.

3. Procédé selon l'une des revendications précédentes, **caractérisé en ce que** la durée de période de modulation de largeur d'impulsion, c'est-à-dire la valeur réciproque de la fréquence de modulation de largeur d'impulsion, est déterminée par le décompte, exécuté au rythme d'un premier signal d'horloge, d'un compteur chargé au début de la période de modulation de largeur d'impulsion avec une valeur de départ,
la valeur de départ étant déterminée par le générateur pseudo-aléatoire,
en particulier le générateur pseudo-aléatoire étant exploité au rythme d'un second signal d'horloge.

4. Procédé selon l'une des revendications précédentes, **caractérisé en ce que** le générateur pseudo-aléatoire comprend un registre à décalage rétro-couplé via un élément de liaison,
en particulier l'élément de liaison, lors de l'activation, applique en particulier une valeur initiale non nulle au registre à décalage et ensuite, en particulier lors du fonctionnement ultérieur, le résultat d'une liaison logique des signaux de sortie du registre à décalage est appliqué à l'entrée du registre à décalage.

5. Procédé selon l'une des revendications précédentes, **caractérisé en ce que** le générateur pseudo-aléatoire comprend des bascules montées en série, en particulier des bascules de type bascule-T, en particulier des bascules T, dont les entrées d'horloge sont synchronisées avec le même signal d'horloge, en particulier avec le second signal d'horloge, et dont les sorties sont appliquées comme valeur de départ, en particulier valeur de départ représentée numériquement en parallèle, à un compteur, en particulier après que le compteur a décrémenté à un ou/et lorsque le compteur est démarré,
les sorties des bascules étant appliquées à un élément de liaison, dont la sortie est appliquée à l'entrée d'une première des bascules montées en série.

6. Procédé selon l'une des revendications précédentes, **caractérisé en ce que** la liaison logique est une liaison EXOR, en particulier une liaison OU exclusif, ou est composée uniquement de liaisons EXOR, en particulier de liaisons OU exclusif.

7. Procédé selon l'une des revendications précédentes, **caractérisé en ce que** la liaison logique fonctionne comme un générateur de parité.

8. Procédé selon l'une des revendications précédentes, **caractérisé en ce que** le premier signal d'horloge est asynchrone par rapport au second signal d'horloge,
en particulier le premier signal d'horloge est généré par une autre base de temps que le second signal d'horloge,
en particulier un premier quartz oscillant fonctionne comme base de temps pour le premier signal d'horloge et un second quartz oscillant différent fonctionne comme base de temps pour le second signal d'horloge,
et/ou **en ce que**
la base de temps du générateur pseudo-aléatoire est indépendante de la base de temps de génération de la fréquence de modulation de largeur d'impulsion,
et/ou **en ce que**
la base de temps du générateur pseudo-aléatoire est asynchrone par rapport à la base de temps de génération de la fréquence de modulation de largeur d'impulsion.

9. Procédé selon au moins l'une des revendications précédentes, **caractérisé en ce que** la valeur réciproque de la durée T est supérieure à la fréquence de résonance du circuit résonant, en particulier du circuit oscillant, formé par l'inductance et la ou les capacités.

10. Procédé selon au moins l'une des revendications précédentes, **caractérisé en ce que** le hacheur de freinage est toujours désactivé lorsque la tension de circuit intermédiaire passe en dessous d'un seuil U2.

11. Procédé selon au moins l'une des revendications précédentes, **caractérisé en ce que** le hacheur de freinage est activé lorsque la tension de circuit intermédiaire dépasse un premier seuil U1,
en particulier et lorsque soit aucune activation n'a eu lieu auparavant, soit la dernière activation ayant eu lieu auparavant remonte à plus d'une durée T prédéfinie,
la durée T étant égale à la valeur réciproque de la fréquence f.

12. Procédé selon au moins l'une des revendications précédentes, **caractérisé en ce que** le premier seuil de commutation U1 est supérieur au second seuil de commutation U2.

13. Système d'entraînement conçu pour la mise en œuvre d'un procédé selon l'une des revendications précédentes,
**caractérisé en ce que**
un compteur décrémentant au rythme d'un premier signal d'horloge à partir d'une valeur de départ respective détermine la durée de période de modulation de largeur d'impulsion, c'est-à-dire la valeur réciproque de la fréquence de modulation de largeur d'impulsion,
un générateur pseudo-aléatoire exploité au rythme d'un second signal d'horloge génère la valeur de départ,
une première base de temps applique le premier signal d'horloge au compteur,
une seconde base de temps applique le second signal d'horloge au compteur.

14. Système d'entraînement selon au moins l'une des revendications précédentes, **caractérisé en ce que** la seconde base de temps est réalisée de manière indépendante par rapport à la première base de temps, de sorte que la première base de temps fonctionne de manière asynchrone par rapport à la seconde base de temps, c'est-à-dire que le premier signal d'horloge est asynchrone par rapport au second signal d'horloge.
